# EUROPÄISCHE PATENTSCHRIFT

(11) **EP 3 498 567 B1**
(45) Veröffentlichungstag und Bekanntmachung des Hinweises auf die Patenterteilung: **11.11.2020**
(21) Anmeldenummer: 18194994.2
(22) Anmeldetag: 18.09.2018
(51) Int. Cl.: B61F 5/08, F16F 1/38, F16F 1/41

(54) **FEDERVORRICHTUNG, FEDERSYSTEM UND FAHRZEUG**
SPRING DEVICE, SPRING SYSTEM AND VEHICLE
DISPOSITIF DE TRANSPORT, SYSTÈME DE TRANSPORT ET VÉHICULE

(30) Priorität: 06.12.2017 DE 102017222009
(43) Veröffentlichungstag der Anmeldung: 19.06.2019
(73) Patentinhaber: ContiTech Luftfedersysteme GmbH, 30165 Hannover (DE)
(72) Erfinder: Sanz, Andre, 21077 Hamburg (DE); Zander, Christoph, 22927 Großhansdorf (DE); Behnke, Andreas, 21149 Hamburg (DE); Jakubowski, Marc, 22047 Hamburg (DE)
(74) Vertreter: Preusser, Andrea

(56) Entgegenhaltungen:
- CN-A- 105 987 118
- DE-A1-102015 112 118
- DE-A1-102016 104 496
- JP-A- 2007 278 398

## Beschreibung

Die Erfindung betrifft eine Federvorrichtung, ein Federsystem mit der Federvorrichtung sowie ein Fahrzeug mit dem Federsystem oder mit der Federvorrichtung.

Eine Federvorrichtung kann vereinfacht auch als Federung bezeichnet sein. Eine Federvorrichtung kann beispielsweise zwischen zwei Bauteilen angeordnet sein, so dass die beiden Bauteile federnd miteinander verbunden sind. Die Federvorrichtung wird beispielsweise für Fahrzeuge, insbesondere Schienenfahrzeuge, eingesetzt. Deshalb kann die Federvorrichtung auch als Schienenfahrzeugfederung ausgebildet sein. Zur Federung eines Schienenfahrzeugs werden oftmals eine sogenannte Primärfederung und eine sogenannte Sekundärfederung verwendet. Unter der Primärfederung wird zumeist eine Federung zwischen einem ungefederten Radsatz und einem Fahrwerk des Schienenfahrzeugs verstanden. Die Primärfederung dient deshalb beispielsweise dazu, bei einem Schienenfahrzeug mit Rädern aus Metall eine Federung bereitzustellen, die zwischen der Radachse und dem Fahrwerk wirkt. Unter der Sekundärfederung wird zumeist eine Federung verstanden, die zwischen dem Fahrwerk und der Karosserie des Schienenfahrzeugs angeordnet ist. Somit ist es möglich, dass die Federvorrichtung als Primärfedervorrichtung, als Sekundärfedervorrichtung oder zumindest als ein Teil eines der zuvor genannten Federvorrichtungen ausgebildet ist.

Um die gewünschte Federwirkung einer Federvorrichtung zu erreichen, ist die Verwendung eines elastisch verformbaren Federelements bekannt. Dieses Federelement kann zumindest teilweise aus Gummi oder einem anderen elastisch verformbaren Element hergestellt sein. In der Praxis wurde festgestellt, dass derartig elastisch verformbare Federelemente durch mechanisches Einwirken und/oder durch Feuer besonders leicht beschädigt werden können. Es wurde deshalb der Bedarf erkannt, das elastisch verformbare Federelement vor äußeren Einflüssen zu schützen.

In dem Dokument DE 10 2015 112 118 A1 wird ein Schutzelement vorgeschlagen, das sich von einem Kern an einer Stirnseite des elastisch verformbaren Federelements zu einem äußeren Stück an der gegenüberliegenden Stirnseite des Federelements erstreckt, so dass das Schutzelement das Federelement mantelseitig umhüllt. Damit kann eine Schutzwirkung erzielt werden.

Das aus dem zuvor genannten Dokument bekannte Schutzelement weist jedoch den Nachteil auf, dass auch das Schutzelement elastisch verformbar ist. Ein besonders schwerer Steinschlag oder die mechanische Beeinflussung durch ein anderes, beispielsweise metallisches Teil kann deshalb über das Schutzelement auf das elastisch verformbare Federelement einwirken. Bei derartigen Ereignissen ist nicht immer sicher gewährleistet, dass das elastische Schutzelement ebenfalls zerstört ist. In einem ungünstigen Fall kann das elastische Schutzelement keinen direkten Aufschluss darüber geben, ob das elastisch verformbare Federelement beschädigt ist oder in der Vergangenheit beschädigt wurde. Darüber hinaus unterliegt das elastisch verformbare Federelement einer natürlichen Abnutzung, die durch die Einfederungsbewegungen des elastisch verformbaren Federelements auftreten. Eine Möglichkeit zur ersten Überprüfung der Abnutzung des elastisch verformbaren Federelements könnte zwar grundsätzlich durch eine optische Überprüfung des Federelements erfolgen. Durch das in dem zuvor genannten Dokument genannte Schutzelement wird eine derartige optische Überprüfung jedoch verhindert. Denn der mantelseitige Zugang zu dem elastisch verformbaren Federelement ist durch das Schutzelement versperrt. Eine schnelle und einfache Wartungsüberprüfung des elastisch verformbaren Federelements kann somit hier nicht erfolgen.

Der vorliegenden Erfindung liegt deshalb die Aufgabe zu Grunde, eine Federvorrichtung mit einem elastisch verformbaren Federelement bereitzustellen, das vor äußeren Einflüssen geschützt ist und zugleich eine besonders einfache Möglichkeit bietet, um eine optische Überprüfung des elastisch verformbaren Federelements zu gewährleisten.

Gemäß einem ersten Aspekt der vorliegenden Erfindung wird die zuvor genannte Aufgabe durch eine Federvorrichtung mit den Merkmalen des Anspruchs 1 gelöst. Vorgeschlagen wird also eine Federvorrichtung, die eine Felge, ein elastisch verformbares Federelement und ein Befestigungselement aufweist. Ein Ende des Federelements ist mit einer Innenseite der Felge verbunden. Ein zweites Ende des Federelements ist mit dem Befestigungselement verbunden. Damit erstreckt sich das Federelement von dem Befestigungselement zu der Felge. Die Federvorrichtung weist ein erstes, zylindrisches Schutzelement und ein zweites zylindrisches Schutzelement auf. Das erste Schutzelement ist an einer Außenseite der Felge befestigt. Außerdem erstreckt sich das erste Schutzelement von der Felge in Richtung des Befestigungselements und ist mantelseitig zu dem Federelement angeordnet. Das erste Schutzelement weist außerdem ein erstes Verbindungsprofil an einem von der Felge abgewandten Endabschnitt auf. Das zweite Schutzelement ist an dem Befestigungselement befestigt, erstreckt sich von dem Befestigungselement in Richtung der Felge und ist mantelseitig zu dem Federelement angeordnet. Das zweite Schutzelement weist außerdem ein zweites Verbindungsprofil an einem von dem Befestigungselement abgewandten Endabschnitt auf. Das Federelement, das erste Schutzelement und das zweite Schutzelement sind derart ausgebildet, dass eine lösbare, formschlüssige Verbindung zwischen dem ersten Verbindungsprofil und dem zweiten Verbindungsprofil entsteht, wenn die Federvorrichtung in einem ersten Belastungszustand ist.

Das erste und zweite Schutzelement bieten den Vorteil, dass die Schutzelemente das elastisch verformbare Federelement vor äußeren Einflüssen schützen können. Sie können jeweils zum Schutz vor mechanischen Einflüssen ausgebildet sein. Sowohl das erste Schutzelement als auch das zweite Schutzelement sind mantelseitig zu dem Federelement angeordnet. Dabei erstreckt sich das erste Schutzelement von der Felge in Richtung des Befestigungselements. Das zweite Schutzelement hingegen erstreckt sich von dem Befestigungselement in Richtung der Felge. Somit können sich die beiden Schutzelemente aufeinander zu erstrecken. Außerdem weist das erste Schutzelement ein erstes Verbindungsprofil und das zweite Schutzelement ein zweites Verbindungsprofil auf. Die beiden Verbindungsprofile sind an den jeweiligen Endabschnitten der zugehörigen Schutzelemente angeordnet, so dass die beiden Verbindungsprofile einander zugewandt angeordnet sein können. Es kann deshalb die gewünschte, lösbare formschlüssige Verbindung zwischen dem ersten Verbindungsprofil und dem zweiten Verbindungsprofil entstehen, wenn die Federvorrichtung in dem ersten Belastungszustand ist. Der erste Belastungszustand ist vorzugsweise ein vorbestimmter, erster Belastungszustand. Die Belastung bei diesem Belastungszustand bezieht sich vorzugsweise auf eine Belastungsrichtung der Federvorrichtung bzw. des elastisch verformbaren Federelements. Dadurch kann das elastisch verformbare Federelement einfedern, was den Abstand zwischen dem ersten und zweiten Verbindungsprofil soweit verringern kann, dass das erste und zweite Verbindungsprofil formschlüssig ineinander greifen, um die lösbare, formschlüssige Verbindung zu bilden. Dadurch kann der technische Effekt erreicht werden, dass das erste Schutzelement und das zweite Schutzelement gemeinsam einen geschlossenen Schutz für das elastisch verformbare Federelement vor mechanische Einflüssen bieten.

Wie zuvor erläutert, ist die formschlüssige Verbindung zwischen dem ersten Verbindungsprofil und dem zweiten Verbindungsprofil grundsätzlich lösbar. Dies bietet die Möglichkeit, dass die Schutzelemente durch Lösung der formschlüssigen Verbindung voneinander beabstandet sind bzw. werden. Dadurch wird das elastisch verformbare Federelement von außen zugänglich. Die Lösung der formschlüssigen Verbindung kann beispielsweise während einer Wartung der Federvorrichtung vorgenommen werden. In diesem Fall kann also ein Zugang zu dem elastisch verformbaren Federelement geschaffen werden, was beispielsweise eine optische Wartungsüberprüfung ermöglicht.

Vorzugsweise ist jedes der Schutzelemente in einer Radialrichtung zu dem elastisch verformbaren Federelement beabstandet ausgebildet. Dies verhindert effektiv, dass es zu einer ungewünschten mechanischen Reibung zwischen dem elastisch verformbaren Federelement und eines der beiden Schutzelemente während des Gebrauchs der Federvorrichtung kommt.

Das Befestigungselement kann einen Kern aufweisen, an dem das zweite Ende des Federelements anliegt und/oder dort befestigt ist. Das Befestigungselement kann eine Befestigungsplatte aufweisen. Die Befestigungsplatte kann an einem von der Felge abgewandten Ende des Kerns angeordnet sein. Außerdem kann die Befestigungsplatte lösbar, formschlüssig, kraftschlüssig und/oder stoffschlüssig mit dem Kern verbunden sein.

Das Federelement ist vorzugsweise als ein Federelement mit elastomeren Eigenschaften ausgebildet. So kann das Federelement beispielsweise als Elastomerfeder ausgebildet sein. Außerdem ist es möglich, dass das Federelement als eine Gummifeder ausgebildet ist. Das Federelement bietet deshalb den Vorteil, dass es verformbar ist, so dass die gewünschte Federwirkung bereitgestellt werden kann.

Für eine vorteilhafte Ausgestaltung des Federelements hat es sich als vorteilhaft erwiesen, wenn das Federelement als ein elastomeres Federelement, mit integrierten Versteifungsblechen ausgebildet ist. Die Versteifungsbleche können als metallische Versteifungsbleche ausgebildet sein. Somit kann das Federelement beispielsweise von einer Gummi-Metall-Feder gebildet sein. Außerdem hat es sich als vorteilhaft erwiesen, wenn das Federelement konusförmig oder als Konusfeder ausgebildet ist. Dadurch kann eine entsprechende Federkernlinie von dem Federelement gewährleistet werden.

Die Felge ist vorzugsweise ringförmig ausgebildet. Der Innenraum der Felgen als solches kann hohl ausgestaltet sein. Außerdem kann die Felge mehrteilig ausgebildet sein. Vorzugsweise ist die Felge jedoch einteilig ausgebildet.

Eine vorteilhafte Ausgestaltung der Federvorrichtung zeichnet sich dadurch aus, dass die Federvorrichtung in dem ersten Belastungszustand ist, wenn mindestens eine erste vorbestimmte Kraft in einer Federrichtung auf die Federvorrichtung wirkt. Dies bietet den Vorteil, dass die formschlüssige Verbindung zwischen dem ersten Verbindungsprofil und dem zweiten Verbindungsprofil nicht notwendiger Weise immer besteht. Vielmehr hängt es beispielsweise von der tatsächlich auftretenden Kraft in Federrichtung der Federvorrichtung ab. Wird die Federvorrichtung in der Federvorrichtung mit einer Kraft belastet, die zumindest der vorbestimmten Kraft entspricht oder größer ist, so können das erste Verbindungsprofil und das zweite Verbindungsprofil beispielsweise derart ineinander greifen, dass die formschlüssige Verbindung entsteht bzw. gebildet wird. Diese ist weiterhin lösbar. Denn wird die vorbestimmte Kraft in Federrichtung der Federvorrichtung nicht erreicht, kann es vorgesehen sein, dass die beiden Verbindungsprofile nicht (mehr) formschlüssig ineinander greifen, und somit eine Trennung zwischen dem ersten und zweiten Schutzelement erreichbar ist.

Die Federrichtung ist vorzugsweise eine längsaxiale Richtung der Federvorrichtung. Die Federrichtung kann eine vorbestimmte Richtung, in der die Federvorrichtung bestimmungsgemäß belastet werden kann, sein. Außerdem hat es sich als vorteilhaft erwiesen, wenn die erste, vorbestimmte Kraft für Federvorrichtung individuell für die jeweilige Federvorrichtung vorbestimmt ist, beispielsweise basierend auf den konstruktiven Eigenschaften der Federvorrichtung. So kann die erste vorbestimmte Kraft beispielsweise bei einer Leerlast erreicht werden, für die die Federvorrichtung konstruktiv ausgelegt ist.

Der erste Belastungszustand der Federvorrichtung liegt vorzugsweise dann vor, wenn zumindest die erste vorbestimmte Kraft in der Federrichtung auf die Federvorrichtung wirkt. Der erste Belastungszustand liegt vorzugsweise aber auch dann vor, wenn die auf die Federvorrichtung wirkende Kraft größer, insbesondere deutlich größer, als die erste vorbestimmte Kraft in der Federrichtung ist. Wird die Federvorrichtung in der Praxis beispielsweise als Primärfeder eingesetzt, kann der erste Belastungszustand bereits erreicht werden, wenn die Karosserie zumindest indirekt auf dem Fahrgestell abgestützt ist. Sodann ist die Federvorrichtung beispielsweise bereits in dem ersten Belastungszustand. Wird die Karosserie nun außerdem mit Gütern belastet oder steigen Fahrgäste ein, erhöht sich die auf die Federvorrichtung in Federrichtung wirkende Kraft. Der erste Belastungszustand bleibt jedoch, wie zuvor bevorzugt erläutert, erhalten.

Eine vorteilhafte Ausgestaltung der Federvorrichtung zeichnet sich dadurch aus, dass sich das erste Schutzelement und das zweite Schutzelement im ersten Belastungszustand gemeinsam mantelseitig um das Federelement erstrecken, so dass zwischen dem Federelement und den Schutzelementen ein geschlossener Schutzraum gebildet ist. Der Schutzraum kann mantelseitig zu dem Federelement und innenseitig zu den beiden Schutzelementen ausgebildet sein. Außerdem ist der Schutzraum geschlossen. Dies bietet den Vorteil, dass das Federelement zumindest mantelseitig durch die beiden Schutzelemente vor äußeren mechanischen Einflüssen und/oder vor anderen äußeren Einflüssen, die von außen auf das Federelement einwirken könnten, geschützt ist. Insbesondere ist durch die geschlossene Ausgestaltung des Schutzraums gewährleistet, dass das Federelement beispielsweise vor Staub oder Schmutz geschützt ist. Vorzugsweise ist der geschlossene Schutzraum nur im ersten Belastungszustand gebildet. Ist die formschlüssige Verbindung zwischen dem ersten Verbindungsprofil und dem zweiten Verbindungsprofil hingegen gelöst, beispielsweise weil der erste Belastungszustand nicht erreicht ist, kann der Schutzraum geöffnet sein. Dies ist beispielsweise dann von Vorteil, wenn das Federelement optisch überprüft werden soll.

Eine vorteilhafte Ausgestaltung der Federvorrichtung zeichnet sich dadurch aus, dass das erste Schutzelement und das zweite Schutzelement derart ausgebildet sind, so dass diese im ersten Belastungszustand kontaktfrei zu dem Federelement angeordnet sind. Dies gilt insbesondere auch dann, wenn die Federvorrichtung bzw. das Federelement einfedert. Dabei soll die kontaktfreie Anordnung bevorzugt aufrecht erhalten bleiben. Dies bietet den Vorteil, dass die Schutzelemente und/oder das Federelement keinem Reibverschleiß durch gegenseitiges Aneinanderreiben unterliegen.

Eine vorteilhafte Ausgestaltung der Federvorrichtung zeichnet sich dadurch aus, dass das Federelement, das erste Schutzelement und das zweite Schutzelement derart ausgebildet sind, dass das erste Verbindungsprofil und das zweite Verbindungsprofil voneinander getrennt sind, wenn die Federvorrichtung in einem unbelasteten Zustand ist. Ist die Federvorrichtung in dem unbelasteten Zustand, kann es vorgesehen sein, dass das Federelement soweit ausfedert, dass die Schutzelemente voneinander getrennt werden. Sie bleiben aber weiterhin an der Felge bzw. an dem Befestigungselement befestigt. Dadurch kann die Trennung zwischen dem ersten Verbindungsprofil und dem zweiten Verbindungprofil hervorgerufen werden. Entsprechendes gilt für die Schutzelemente. Auch diese können somit voneinander getrennt sein. Durch die Trennung kann ein Spalt, insbesondere ein ringförmiger Spalt, zwischen den beiden Verbindungsprofilen bzw. den beiden Schutzelementen entstehen. Dieser Spalt kann zur Kontrolle bzw. Wartung des Federelements verwendet werden. Denn durch den Spalt kann ein Überprüfungs- und/oder Messelement bis zu dem Federelement geführt werden, um hier an dem Federelement die gewünschte Messung und/oder Inspektion vorzunehmen. Zwar kann es vorgesehen sein, dass der Schutzraum im unbelasteten Zustand nicht mehr geschlossen ist, sondern durch den Spalt geöffnet ist. Dies ist jedoch für Überprüfungs- und/oder Wartungszwecke akzeptabel. Denn während der Überprüfung und/oder Wartung unterliegt die Federvorrichtung für gewöhnlich nicht den äußeren Einflüssen, die sich negativ auf das Federelement auswirken.

Eine weitere vorteilhafte Ausgestaltung der Federvorrichtung zeichnet sich dadurch aus, dass die Federvorrichtung in dem unbelasteten Zustand ist, wenn keine Kraft oder weniger als die erste vorbestimmte Kraft in der Federrichtung auf die Federvorrichtung wirkt. So kann die Trennung zwischen den beiden Verbindungsprofilen und/oder zwischen den beiden Schutzelementen bereits entstehen und/oder beginnen zu entstehen, wenn die Federvorrichtung mit einer Kraft beauflagt wird, die etwas kleiner als die erste vorbestimmte Kraft in Federrichtung ist. Wird die Karosserie eines Schienenfahrzeugs beispielsweise bei einer Wartung aufgebockt, so dass die Federvorrichtung, wenn diese bei dem entsprechenden Schienenfahrzeug eingesetzt wird, entlastet wird, so kann die Trennung zwischen den beiden Verbindungsprofilen bzw. den beiden Schutzelementen entstehen. Sodann kann die zuvor erläuterte Wartung bzw. Überprüfung des Federelements stattfinden.

Eine vorteilhafte Ausgestaltung der Federvorrichtung zeichnet sich dadurch aus, dass das erste Verbindungsprofil und das zweite Verbindungsprofil zu mindestens 1 cm, vorzugsweise zu mindestens 3,5 cm, voneinander getrennt sind, wenn die Federvorrichtung in einem unbelasteten Zustand ist. Bei dem unbelasteten Zustand handelt es sich dabei um einen Zustand der Federvorrichtung, wenn keine Kraft oder wenn weniger als 20 %, insbesondere weniger als 10 %, der ersten, vorbestimmten Kraft in der Federvorrichtung auf die Federvorrichtung wirkt. Indem die beiden Verbindungsprofile, und somit vorzugsweise auch die beiden Schutzelemente, um mindestens 1 cm bzw. um mindestens 3,5 cm voneinander beabstandet sind, und zwar vorzugsweise in der Federrichtung, ist es besonders einfach möglich, Mess- und/oder Wartungsinstrumente durch den sich ergebenden Spalt bis zu dem Federelement zu führen, um dort die gewünschte Überprüfung bzw. Wartung vorzunehmen. An dieser Stelle sei daraufhingewiesen, dass der Abstand zwischen den beiden Verbindungsprofilen beispielsweise dann vorliegen kann, wenn zumindest im Wesentlichen keine Kraft auf die Federvorrichtung wirkt, was beispielsweise im unbelasteten Neuzustand der Federvorrichtung der Fall ist.

Eine weitere vorteilhafte Ausgestaltung der Federvorrichtung zeichnet sich dadurch aus, dass das erste Schutzelement und/oder das zweite Schutzelement aus wenigstens einer Polymermischung aufgebaut ist bzw. sind, wobei die Polymermischung wenigstens ein Flammschutzmittel enthält. Diese Ausgestaltung des ersten Schutzelements und/oder zweiten Schutzelements kann gewährleisten, dass das erste und/oder zweite Schutzelement die zugehörige Flammenschutzfunktion für beispielsweise mindestens 30 Minuten oder beispielsweise für mindestens 90 Minuten im Brandfall aufrechterhält.

Als Flammschutzmittel können alle der fachkundigen Person bekannten Flammschutzmittel verwendet werden. Es kommen hierbei insbesondere Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Intumeszenzgemische, Carbonate, wie Calciumcarbonat oder Magnesiumcarbonat, oder Blähgraphit in Frage.

Intumeszenzgemische blähen zu Schäumen auf. Sie werden benutzt, um brennbare Materialien wie Kunststoffe oder Holz, aber auch Stahl, der bei erhöhter Temperatur seine Festigkeit einbüßt, gegen die Einwirkung von Wärme und Feuer zu schützen.

Gegebenenfalls können auch noch geringe Mengen an Antimontrioxid, trotz der gesundheitsgefährdenden Wirkung, in Kombination mit wenigstens einem der genannten Flammschutzmittel verwendet werden.

Bei der Bildung des Grundkörpers des ersten Schutzelement und/oder des Grundkörpers des zweiten Schutzelement kommen insbesondere (teil)vulkanisierbare Polymermischungen zum Einsatz, wobei folgende beiden Werkstoffvarianten wegen ihrer elastischen Eigenschaften zu nennen sind:

### Variante A (Elastomere)

Die Polymermischung ist eine vulkanisierbare thermoplastfreie Kautschukmischung, enthaltend wenigstens eine Kautschukkomponente sowie weitere Mischungsingredienzien. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Bromiertes Copolymer aus Isobutylen und Paramethylstyrol (BIMS), Butadien-Kautschuk (BR), Chloriertes Polyethylen (CM), Chlorsulfoniertes Polyethylen (CSM), Polyepichlorhydrin (ECO), Terpolymere des ECO mit Ethylenoxid und ungesättigten Monomeren (ETER), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM), Polyurethan (PU).

Die vorgenannten Kautschuktypen können unverschnitten sein. Auch der Einsatz eines Verschnittes, insbesondere in Verbindung mit einem der vorgenannten Kautschuktypen, beispielsweise ein NR/BR-Verschnitt oder ein BR/SBR-Verschnitt, ist möglich.

Die üblichen Mischungsingredienzien umfassen wenigstens einen Vernetzer oder ein Vernetzersystem (Vernetzungsmittel und Beschleuniger). Zusätzliche Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Verstärkungsfasern). Diesbezüglich wird auf den allgemeinen Stand der Kautschukmischungstechnologie verwiesen.

### Variante B (Thermoplastische Elastomere)

Die Polymermischung ist eine teilvulkanisierbare Polymermischung, enthaltend wenigstens eine Thermoplastkomponente, wenigstens eine Kautschukkomponente, die zumindest teilvernetzbar ist sowie weitere Mischungsingredienzien. Die bevorzugten Thermoplastkomponenten sind: Polyolefin, insbesondere Polyethylen (PE) oder Polypropylen (PP), Polystyrol (PS), Polyamid (PA), beispielsweise PA6 oder PA6.6, Polyester, beispielsweise PET, PEN oder PBT.

Als Kautschukkomponenten sind hier insbesondere EPM, EPDM, SBR, CR, NR, NBR, FKM, ACM oder AEM zu nennen, die insbesondere mit keiner weiteren Kautschukkomponente verschnitten sind.

Hinsichtlich der üblichen Mischungsingredienzien wird auf die Mischungstechnologie zu der Variante A, insbesondere auf die Lehre gemäß der Offenlegungsschrift DE 100 04 632 A1 verwiesen.

Für das Federelement kann es vorgesehen sein, dass das Federelement mit oder aus wenigstens einer Polymermischung aufgebaut ist. Dabei kann es sich um eine Polymermischung gemäß Variante A oder Variante B handeln.

Eine weiter vorteilhafte Ausgestaltung der Federvorrichtung zeichnet sich dadurch aus, dass eines der beiden Verbindungsprofile als eine umlaufende Nut ausgebildet ist und dass das andere Verbindungsprofil als ein umlaufender Ring ausgebildet ist, so dass der Ring in die Nut einfasst, um die lösbare, formschlüssige Verbindung zu bilden, wenn die Federvorrichtung in dem ersten Belastungszustand ist. Dabei hat es sich als vorteilhaft herausgestellt, wenn die umlaufende Nut korrespondierend zu dem umlaufenden Ring ausgebildet ist, so dass eine fluiddichte formschlüssige Verbindung zwischen den beiden Verbindungsprofilen entsteht, wenn der umlaufende Ring in die umlaufende Nut einfasst. Durch diese formschlüssige Ausbildung der Verbindung ist zugleich eine Lösbarkeit gewährleistet. Die Verbindung ist also eine lösbare, formschlüssige Verbindung. Denn wenn der erste Belastungszustand beispielsweise nicht erreicht wird, sind der umlaufende Ring und die umlaufende Nut voneinander getrennt, so dass beispielsweise der zuvor erläuterte Spalt entsteht.

Eine weiter vorteilhafte Ausgestaltung der Federvorrichtung zeichnet sich dadurch aus, dass eines der beiden Verbindungsprofile einen Zentrierabschnitt aufweist, der zum Führen des anderen Verbindungsprofils ausgebildet ist. Der Zentrierabschnitt kann insbesondere von dem nutförmigen Verbindungsprofil oder von dem Verbindungsprofil mit der umlaufenden Nut gebildet sein. So kann einer der beiden Schenkel der umlaufenden Nut in Längsaxialrichtung bzw. in Federrichtung länger als der andere Schenkel der umlaufenden Nut ausgebildet sein. Dies gewährleistet auch eine Überlappung bei einer Negativauslenkung der Federvorrichtung. Dies kann beispielsweise auftreten, wenn die Federvorrichtung für ein Fahrzeug eingesetzt wird und bei einem Fahrzeugeinsatz Unebenheiten auf der befahrenen Strecke auftreten, die von dem Fahrzeug durchfahren werden. Vorzugsweise ist der längere Schenkel radial außenseitig zu dem kürzeren Schenkel angeordnet. Grundsätzlich kann diese Anordnung jedoch auch umgekehrt ausgebildet sein. Außerdem kann es vorgesehen sein, dass unter einem Schenkel eine umlaufende oder ringförmig umlaufende Lippe, insbesondere Dichtlippe, verstanden wird.

Eine vorteilhafte Ausgestaltung der Federvorrichtung zeichnet sich vorzugsweise dadurch aus, dass eines der beiden Schutzelemente als ein zumindest im Wesentlichen kreiszylindrisches Schutzelement ausgebildet ist und dass das andere Schutzelement als ein balgförmiges Schutzelement ausgebildet ist. Vorzugsweise ist das erste Schutzelement als das kreiszylindrische Schutzelement ausgebildet. Außerdem ist es bevorzugt vorgesehen, dass vorzugsweise das zweite Schutzelement als ein balgförmiges Schutzelement ausgebildet ist. Das balgförmige Schutzelement kann dabei vorzugsweise als Schutzbalg oder als ein balgförmiges, zylindrisches Schutzelement ausgebildet sein. Darüber hinaus ist es möglich, dass die zuvor erläuterte Ausgestaltung im Hinblick auf die Schutzelemente umgekehrt ausgebildet ist. So können beispielsweise das zweite Schutzelement als das kreiszylindrische Schutzelement und das erste Schutzelement als das balgförmige Schutzelement ausgebildet sein.

Die balgförmige Ausgestaltung eines der beiden Schutzelemente bietet den Vorteil, dass sich dieses Schutzelement bei einem Einfedern des elastisch verformbaren Federelements in Federrichtung ebenfalls mitverformen kann. Das balgförmige Schutzelement ist somit ebenfalls bevorzugt elastisch verformbar ausgebildet. Somit wird eine Kollision zwischen den Schutzelementen und dem elastisch verformbaren Federelement effektiv verhindert.

Gemäß einem zweiten Aspekt wird die eingangs genannte Aufgabe durch ein Federsystem mit den Merkmalen des Anspruchs 12 gelöst. Vorgesehen ist also ein Federsystem, das eine Primärfeder und eine Sekundärfeder aufweist. Die Primärfeder ist von einer Federvorrichtung gebildet, wie sie insbesondere nach einem der zuvor erläuterten Ausgestaltungen bzw. zumindest nach dem ersten Aspekt der Erfindung ausgebildet ist. Außerdem sind die Primärfeder und die Sekundärfeder mechanisch in Reihe gekoppelt. Vorzugsweise werden die Begriffe Primärfeder und Sekundärfeder zu Unterscheidungszwecken verwendet. Zwar kann es vorgesehen sein, dass die Primärfeder als Hauptfeder und die Sekundärfeder als Hilfsfeder ausgebildet sind, so dass die Hauptfederwirkung von der Primärfeder gewährleistet wird. Dies ist jedoch nicht unbedingt zwingend gegeben. So kann auch eine umgekehrte Ausgestaltung vorgesehen sein, bei der die Sekundärfeder als Hauptfeder und die Primärfeder als Hilfsfeder ausgebildet sind, so dass die Hauptfederwirkung von der Sekundärfeder gewährleistet wird
Eine vorteilhafte Ausgestaltung des Federsystems zeichnet sich dadurch aus, dass die Sekundärfeder als Luftfeder ausgebildet ist. Dazu kann die Sekundärfeder beispielsweise einen Luftfederbalg aufweisen, der sich von einer mantelseitigen Außenseite der Felge zu einer weiteren Befestigungsplatte erstreckt, so dass zwischen der weiteren Befestigungsplatte, dem Luftfederbalg und der Felge ein Arbeitsraum gebildet ist, der mit einem komprimierbaren Gas, insbesondere Luft, gefüllt ist, so dass die gewünschte Luftfederwirkung erreichbar ist. An der der weiteren Befestigungsplatte zugewandten Stirnseite der Felge ist vorzugsweise eine Gleitplatte mit der Felge gekoppelt. Durch das weitere Befestigungselement und die Gleitplatte kann eine sogenannte Notlaufeigenschaft des Federsystems gewährleistet sein.

Gemäß einem dritten Aspekt wird die eingangs genannte Aufgabe gelöst durch ein Fahrzeug mit den Merkmalen des Anspruchs 14. Es ist also bevorzugt vorgesehen, dass das Fahrzeug eine Federvorrichtung aufweist, wie sie gemäß dem ersten Aspekt der Erfindung bzw. den zugehörigen vorteilhaften Ausgestaltungen vorgesehen ist. Alternativ kann es vorgesehen sein, dass das Fahrzeug ein Federsystem aufweist, wie es gemäß dem zweiten Aspekt oder der bevorzugten Ausgestaltung des Federsystems vorgesehen sein kann, aufweist.

Weitere Merkmale, Vorteile und/oder Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und/oder in beliebiger Kombination den Gegenstand der Erfindung, auch unabhängige von ihrer Zusammensetzung in den einzelnen Ansprüchen und/oder deren Rückbezügen. In den Figuren stehen weiterhin gleiche Bezugszeichen für gleiche oder ähnliche Objekte.
- Fig. 1: zeigt eine Ausgestaltungsvariante der Federvorrichtung im ersten Belastungszustand in einer schematischen Querschnittsansicht;
- Fig. 2: zeigt die Federvorrichtung aus der Figur 1 in einem unbelasteten Zustand in einer schematischen Querschnittsansicht; und
- Fig. 3: zeigt einen Teil eines Schienenfahrzeugs in einer schematischen Seitenansicht.

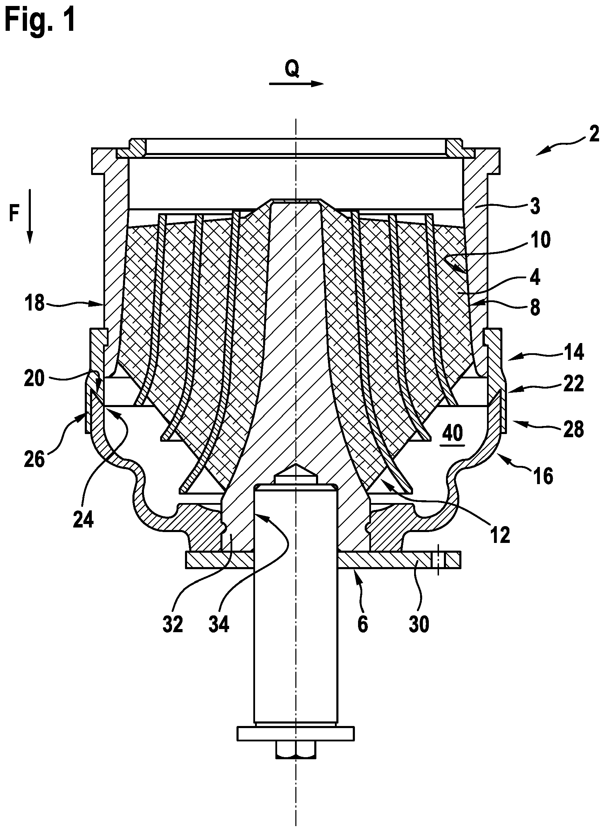

In der Figur 1 ist eine vorteilhafte Ausgestaltung der Federvorrichtung 2 in einer schematischen Querschnittsansicht dargestellt. Die Federvorrichtung 2 kann beispielsweise eine primäre Federvorrichtung 2, die sodann auch als Primärfederung bezeichnet wird, bilden. Es ist aber auch möglich, dass die Federvorrichtung 2 zumindest einen Teil einer sekundären Federvorrichtung bilden kann, die als Sekundärfederung bezeichnet wird.

Die Federvorrichtung 2 weist eine Felge 3, ein elastisch verformbares Federelement 4 und ein Befestigungselement 6 auf. Die Felge 3 ist vorzugsweise als ein ringförmiger, hohler Körper ausgebildet. Dabei kann es sich vorzugsweise um eine metallische Felge 3 handeln. So kann die Mantelwandung der Felge 3 beispielsweise aus Metall sein.

Das Befestigungselement 6 kann eine Befestigungsplatte 30 aufweisen. Alternativ oder ergänzend ist es bevorzugt vorgesehen, dass das Befestigungselement 6 einen keilförmigen, konusförmigen oder pyramidenförmigen Kern 32 aufweist. Die Befestigungsplatte 30 und der Kern 32 können stoffschlüssig, formschlüssig und/oder kraftschlüssig miteinander verbunden sein. Außerdem kann das Befestigungselement 6 und somit insbesondere die Befestigungsplatte 30 und/oder der Kern 32, eine durchgehende Bohrung 34 aufweisen. Es hat sich als vorteilhaft herausgestellt, wenn die Bohrung 34 ein Innengewinde aufweist. Somit kann die Federvorrichtung 2 mittels des Befestigungselements 6, und insbesondere mittels der Befestigungsplatte 30 und/oder dem Kern 32, an einem weiteren Bauteil befestigt werden.

Das elastisch verformbare Federelement 4 ist vorzugsweise aus wenigstens einer Polymermischung aufgebaut. So kann das elastisch verformbare Federelement 4 als eine Gummifeder oder als eine Gummimetallfeder ausgebildet sein. Für die Gummimetallfeder ist es bevorzugt vorgesehen, dass in die Gummimetallfeder metallische Platten 36 eingebracht sind. Diese metallischen Platten 36 werden auch als Bleche bezeichnet.

Das elastisch verformbare Federelement 4 wird im Weiteren auch als Federelement 4 bezeichnet. Das Federelement 4 erstreckt sich von dem Befestigungselement 6 zu der Felge 3. Dabei ist ein erstes Ende 8 des Federelements 4 mit einer Innenseite 10 der Felge 3 verbunden. Ein zweites Ende 12 des Federelements 4 ist mit dem Befestigungselement 6 verbunden. So kann das zweite Ende 12 des Federelements 4 beispielsweise mit dem Kern 32 verbunden sein, der wiederum mit der Befestigungsplatte 30 verbunden ist. Wie zuvor erläutert, sind die Befestigungsplatte 30 und der Kern 32 vorzugsweise dem Befestigungselement 6 zugeordnet.

Bei einem bestimmungsgemäßen Gebrauch der Federvorrichtung 2 können Kräfte zwischen der Felge 3 und dem Befestigungselement 6 wirken. Wirkt beispielsweise eine Kraft in Federrichtung F zwischen der Felge 3 und dem Befestigungselement 6, so wird auch das elastisch verformbare Federelement 4 mit dieser Kraft beaufschlagt. Es tritt deshalb eine Verformung des Federelements 4 ein. Hieraus resultiert ein verringerter Abstand zwischen der Felge 3 und dem Befestigungselement 6. Es kann jedoch auch vorkommen, dass zwischen der Felge 3 und dem Befestigungselement 6 eine Kraft in Querrichtung Q wirkt. Diese Kraft ruft ebenfalls eine Verformung des Federelements 4 hervor, da auch diese Kraft auf das Federelement 4 wirkt. Durch die Verformung des Federelements 4 tritt eine relative Verschiebung zwischen der Felge 3 und dem Befestigungselement 6 ein.

In der Praxis wurde das Bedürfnis erkannt, das Federelement 4 vor äußeren Einflüssen, wie beispielsweise vor mechanischen Schlägen und/oder Feuer, zu schützen. Gleichzeitig besteht jedoch auch das Bedürfnis, einen unmittelbaren Zugang zu dem Federelement 4 zu gewährleisten, um beispielsweise eine optische Überprüfung oder Wartung des Federelements 4 vornehmen zu können.

Um das Federelement 4 vor äußeren Einflüssen zu schützen, weist die Federvorrichtung 2 ein erstes, zylindrisches Schutzelement 14 und ein zweites, zylindrisches Schutzelement 16 auf. Der Begriff zylindrisch ist in diesem Zusammenhang nicht einschränkend auf eine kreiszylindrische Form zu beschränken. Wie es aus der Figur 1 exemplarisch hervorgeht, ist weder der Innendurchmesser noch der Außendurchmesser des ersten, zylindrischen Schutzelements 14 konstant. Dennoch handelt es sich um ein umlaufendes und somit zylindrisches Schutzelement 14. Entsprechende Überlegungen gelten für das zweite, zylindrische Schutzelement 16.

Das erste Schutzelement 14 ist, insbesondere mit einem zugehörigen ersten Endabschnitt, an einer Außenseite 18 der Felge 3 befestigt. Außerdem erstreckt sich das erste Schutzelement 14 von der Felge 3 in Richtung des Befestigungselements 6. Das erste Schutzelement 14 ist deshalb mantelseitig zu dem Federelement 4 angeordnet. Bevorzugt ist das erste Schutzelement 14 beabstandet und/oder kontaktfrei zu dem Federelement 4 angeordnet. Dies verhindert effektiv, dass das erste Schutzelement 14 mechanisch an dem Federelement 4 schleifen kann.

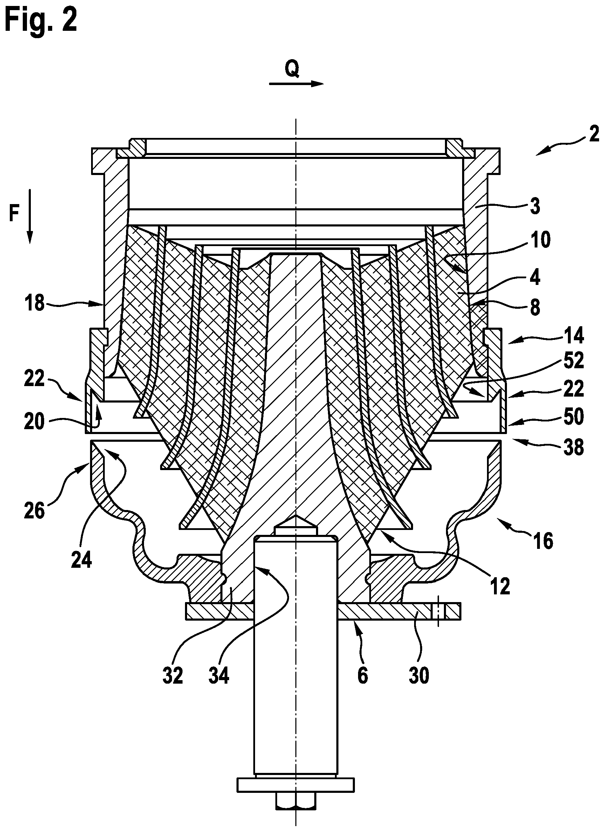

Außerdem weist das erste Schutzelement 14 ein erstes Verbindungsprofil 20 an einem von der Felge 3 abgewandten Endabschnitt 22 auf. Dieses erste Verbindungsprofil 20 ist auch in der Figur 2 schematisch dargestellt. Die Figur 2 zeigt die Federvorrichtung 2 in einem unbelasteten Zustand.

Das zweite, zylindrische Schutzelement 16 wird auch als zweites Schutzelement 16 bezeichnet. Das zweite Schutzelement 16 ist mit einem Ende an dem Befestigungselement 6 befestigt. So kann das zweite Schutzelement 14 beispielsweise an der Befestigungsplatte 30 und/oder an dem Kern 32 befestigt sein. Das zweite Schutzelement 16 erstreckt sich von dem Befestigungselement 6 in Richtung der Felge 3. Das zweite Schutzelement 16 ist deshalb mantelseitig zu dem Federelement 4 angeordnet. Außerdem ist es bevorzugt vorgesehen, dass das zweite Schutzelement 16 beabstandet und/oder kontaktfrei zu dem Federelement 4 angeordnet ist.

Wie exemplarisch aus der Figur 2 zu entnehmen ist, erstrecken sich das erste Schutzelement 14 und das zweite Schutzelement 16 aufeinander zu. Das zweite Schutzelement 16 weist außerdem ein zweites Verbindungsprofil 24 an einem von dem Befestigungselement 6 abgewandten Endabschnitt 26 auf. Hieraus resultiert, dass das erste Verbindungsprofil 20 und das zweite Verbindungsprofil 24 einander gegenüberliegend angeordnet sind, wenn die Federvorrichtung 2 in einem unbelasteten Zustand ist. Dabei ist es bevorzugt vorgesehen, dass die beiden Verbindungsprofile 20, 24 bzw. die beiden Endabschnitte 22, 26 durch einen Spalt 38 voneinander getrennt sind, wenn die Federvorrichtung 2 in dem unbelasteten Zustand ist. Dies ist schematisch in der Figur 2 dargestellt. Das erste Federelement 4, das erste Schutzelement 14 und das zweite Schutzelement 16 sind derart ausgebildet, dass eine lösbare, formschlüssige Verbindung 28 zwischen dem ersten Verbindungsprofil 20 und dem zweiten Verbindungsprofil 24 gebildet ist, wenn die Federvorrichtung 2 in einem ersten Belastungszustand ist. Dies ist schematisch in der Figur 1 gezeigt. Dabei ist es bevorzugt vorgesehen, dass das Federelement 4 durch den ersten Belastungszustand der Federvorrichtung 2 derart verformt ist, dass das erste Verbindungsprofil 20 und das zweite Verbindungsprofil 24 formschlüssig ineinander fassen, um die lösbare, formschlüssige Verbindung 28 zu bilden. Das erste Verbindungsprofil 20 und das zweite Verbindungsprofil 24 sind deshalb bevorzugt komplementär und/oder korrespondierend zueinander ausgebildet. Außerdem ist es bevorzugt vorgesehen, dass der Durchmesser des ersten Verbindungsprofils 20 zu dem Durchmesser des zweiten Verbindungsprofils 24 korrespondiert, so dass die formschlüssige Verbindung 28 selbstständig bei Eintreten des ersten Belastungszustands der Federvorrichtung 2 gebildet werden kann.

Vorzugsweise ist die Federvorrichtung 2 in dem ersten Belastungszustand, wenn mindestens eine vorbestimmte Kraft in der Federrichtung F auf die Federvorrichtung 2 wirkt. Dies ist beispielsweise dann der Fall, wenn die vorbestimmt Kraft zwischen der Felge 3 und dem Befestigungselement 6 in Federrichtung F wirkt. Sodann kommt es zu der entsprechenden Verformung des Federelements 4. Die Felge 3 und das Befestigungselement 6 werden deshalb aufeinander zubewegt, was sodann zu der formschlüssigen Verbindung 28 zwischen dem ersten Verbindungsprofil 20 und dem zweiten Verbindungsprofil 24 führt. Der erste Belastungszustand kann beispielsweise dann erreicht sein, wenn die Federvorrichtung 2 in einem Fahrzeug zwischen einer Radachse und einem Fahrgestell angeordnet ist und das Fahrgestell durch das Leergewicht der Karosserie des Fahrzeugs belastet ist. Die vorbestimmte Kraft kann sich also auf die jeweilige Federvorrichtung 2 richten. Sie kann insbesondere nach den konstruktiven Eigenschaften der Federvorrichtung 2 individuell vorbestimmt sein.

Ist die formschlüssige Verbindung 28 zwischen dem ersten Verbindungsprofil 20 und dem zweiten Verbindungsprofil 24 hergestellt, können das erste Schutzelement 14 und das zweite Schutzelement 16 einen durchgängigen, mantelseitigen Schutz für das Federelement 4 bieten. Dabei ist es bevorzugt vorgesehen, dass das erste Schutzelement 14 und das zweite Schutzelement 16 jeweils mantelseitig geschlossen und/oder ununterbrochen ausgebildet sind. Somit können sich das erste und zweite Schutzelement 14, 16 im ersten Belastungszustand der Federvorrichtung 2 gemeinsam mantelseitig um das Federelement 4 erstrecken, so dass zwischen dem Federelement 4 und den Schutzelementen 14, 16 ein geschlossener Schutzraum 40 gebildet ist.

Übersteigt die auf die Federvorrichtung 2 in Federrichtung F wirkende Kraft die erste vorbestimmte Kraft, so ist es bevorzugt vorgesehen, dass die Federvorrichtung 2 weiterhin in dem ersten Belastungszustand ist. Denn durch die weitere Erhöhung der Kraft in Federrichtung F wird die formschlüssige Verbindung 28 zwischen dem ersten Verbindungsprofil 20 und dem zweiten Verbindungsprofil 24 nicht aufgehoben. Vielmehr ist es bevorzugt vorgesehen, dass zumindest das zweite Schutzelement 16 als ein elastisch verformbares Schutzelement 16 ausgebildet ist. So kann das zweite Schutzelement 16 nach Art eines Faltenbalgs und/oder nach Art eines verformbaren Balgs ausgebildet sein. Wirkt nun also die erhöhte Kraft auf die Federvorrichtung 2, was zu der entsprechenden Verformung des Federelements 4 führt, so kann es zu einer entsprechenden, gleichzeitigen und elastischen Verformung des zweiten Schutzelements 16 kommen. Grundsätzlich kann es vorgesehen sein, dass das erste Schutzelement 14 ebenfalls ein elastisch verformbares Schutzelement 14 ausgebildet ist. Es ist jedoch bevorzugt vorgesehen, dass die Biegesteifigkeit des ersten Schutzelements 14 größer als die Biegesteifigkeit des zweiten Schutzelements 16 ist.

Ist die lösbare, formschlüssige Verbindung 28 hergestellt, ist zwar das Federelement 4 durch die beiden Schutzelemente 14, 16 geschützt. Wie eingangs erläutert ist es jedoch auch wünschenswert, dass ein unmittelbarer Zugang zu dem Federelement 4 bereitgestellt werden kann, um beispielsweise eine optische Überprüfung und/oder Wartung ausführen zu können. Es ist deshalb bevorzugt vorgesehen, dass das Federelement 4, das erste Schutzelement 14 und das zweite Schutzelement 16 derart ausgebildet sind, dass das erste Verbindungsprofil 20 und das zweite Verbindungsprofil 24 voneinander getrennt sind, wenn die Federvorrichtung 2 in einem unbelasteten Zustand ist. Die Federvorrichtung 2 ist vorzugsweise in dem unbelasteten Zustand, wenn keine Kraft, oder weniger als die erste vorbestimmte Kraft, oder weniger als beispielsweise 50 % der vorbestimmten Kraft in Federrichtung F auf die Federvorrichtung 2 wirkt. Denn sobald die erste vorbestimmte Kraft in Federrichtung F auf die Federvorrichtung 2 wirkt, beginnt oder entsteht die Trennung zwischen den beiden Verbindungsprofilen 20, 24. Desto kleiner die auf die Federvorrichtung 2 in Federrichtung F wirkende Kraft ist, desto weiter entfernen sich die beiden Verbindungsprofile 20, 24 bzw. desto größer wird der Spalt 38 zwischen dem Endabschnitt 22 des ersten Schutzelements 14 und dem Endabschnitt 26 des zweiten Schutzelements 16. Wirkt im Wesentlichen keine Kraft mehr in Federrichtung F auf die Federvorrichtung 2, ist der Spalt 38 ausreichend groß, um durch diesen ein Messinstrument bis zu dem Federelement 4 zu führen. Dies erlaubt eine optische Überprüfung und/oder Wartung. Es hat sich als besonders vorteilhaft erwiesen, wenn das erste und zweite Verbindungsprofil 20, 24 zu zumindest 1 cm, vorzugsweise zu zumindest 3,5 cm, voneinander getrennt sind bzw. voneinander beabstandet sind, wenn die Federvorrichtung 2 in dem unbelasteten Zustand ist.

Eine vorteilhafte Ausgestaltung der beiden Verbindungsprofile 20, 24 ist den Figuren 1 und 2 schematisch zu entnehmen. Es ist bevorzugt vorgesehen, dass eines der beiden Verbindungsprofile 20, 24 als eine umlaufende Nut ausgebildet ist. Das andere Verbindungsprofil 24, 20 ist dabei als umlaufender Ring ausgebildet, so dass der Ring in die Nut einfasst um die lösbare, formschlüssige Verbindung 28 zu bilden, wenn die Federvorrichtung 2 in dem ersten Belastungszustand ist. Rein beispielhaft zeigen die Figuren 1 und 2 den Fall, bei dem das erste Verbindungsprofil 20 als eine umlaufende Nut ausgebildet ist. Somit ist in diesem Fall das zweite Verbindungsprofil 24 als umlaufender Ring ausgebildet. Grundsätzlich ist es jedoch auch möglich, dass das zweite Verbindungsprofil 24 als umlaufende Nut und das erste Verbindungsprofil 20 als umlaufender Ring ausgebildet sind. Für die weitere Erläuterung wird jedoch rein beispielhaft auf den zuerst erläuterten Fall eingegangen.

Wenn die Federvorrichtung 2 von dem unbelasteten Zustand, wie es beispielsweise in Figur 2 gezeigt ist, in den ersten Belastungszustand, wie es in Figur 1 gezeigt ist, überführt wird, werden die beiden Verbindungsprofile 20, 24 aufeinander zubewegt. Dabei fasst der umlaufende Ring (also beispielsweise das zweite Verbindungsprofil 24) in die umlaufende Nut (also beispielsweise das erste Verbindungsprofil 20) ein. Bei Erreichen des ersten Belastungszustands greift der umlaufende Ring derart weit und formschlüssig in die umlaufende Nut ein, dass die lösbare, formschlüssige Verbindung 28 zwischen den beiden Verbindungsprofilen 20, 24 gewährleistet ist. Die Verbindung 28 ist dabei vorzugsweise umlaufend ausgebildet. Dies verhindert effektiv, dass Schmutz und/oder andere Einflüsse von außen in den geschlossenen Innenraum 40 eindringen können.

Um den Übergang von dem unbelasteten Zustand zu dem ersten Belastungszustand und außerdem um die Herstellung der lösbaren, formschlüssigen Verbindung 28 besonders sicher zu gewährleisten, ist es bevorzugt vorgesehen, dass eines der beiden Verbindungsprofile 20, 24 einen Zentrierabschnitt aufweist, der zum Führen des anderen Verbindungsprofils 24, 20 ausgebildet ist. Außerdem kann es vorgesehen sein, dass beide Verbindungsprofile 20, 24 jeweils einen Zentrierabschnitt aufweisen, so dass ein gemeinsames Führen des jeweils anderen Verbindungsprofils 24, 20 gewährleistet wird. Ein Zentrierabschnitt kann insbesondere von dem Verbindungsprofil 20 mit der umlaufenden Nut gebildet sein. So kann einer der beiden Schenkel 50 in Federrichtung F länger als der andere Schenkel 52 ausgebildet sein. Beim Übergang von dem unbelasteten Zustand zum ersten Belastungszustand der Federvorrichtung 2 fast das Verbindungsprofil 24 mit dem umlaufenden Ring radial innenseitig zu dem längeren Schenkel 50 in das Verbindungsprofil 20 mit der umlaufenden Nut ein und wird dabei von dem längeren Schenkel 50 geführt.

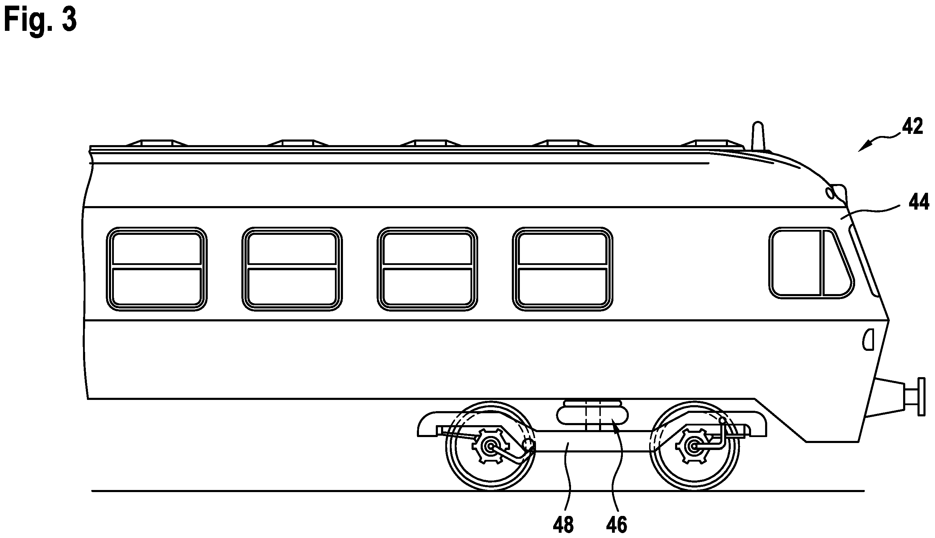

In der Figur 3 ist ein Teil eines Schienenfahrzeugs 42 in einer schematischen Seitenansicht gezeigt. Das Schienenfahrzeug 42 weist eine Karosserie 44 auf. Die Karosserie 44 wird auch als Aufbau des Schienenfahrzeugs 42 bezeichnet. Die Karosserie 44 ist mittels einer Sekundärfeder 46 an einem Fahrgestell 48 des Schienenfahrzeugs 42 befestigt. Das Fahrgestell 48 ist über Primärfedern (nicht dargestellt) mit einer Achse gekoppelt, an der die Räder drehbar gelagert befestigt sind. Die zuvor erläuterte Federvorrichtung 2 kann dabei eine Primärfeder bilden. Alternativ oder ergänzend ist es möglich, dass eine Federvorrichtung 2 zumindest einen Teil der Sekundärfederung 46 bildet. Im bestimmungsgemäßen Betrieb ruft die Karosserie 44 eine Kraft auf die Sekundärfeder 46 und/oder die Primärfeder hervor, so dass die jeweils gegebenenfalls zugehörige Federvorrichtung 2 in einem ersten Belastungszustand ist. Somit ist für jede der Federvorrichtungen 2 die lösbare, formschlüssige Verbindung 28 gebildet. Zu Wartungs- und/oder Überprüfungszwecken kann die Karosserie 44 jedoch anderweitig abgestützt werden, so dass die Gewichtskraft der Karosserie nicht über die Sekundärfeder 46 auf das Fahrgestell 48 wirkt. Damit kann es bereits gewährleistet werden, dass zumindest die der Sekundärfeder 46 zugeordnete Federvorrichtung 2 in einem unbelasteten Zustand ist. Darüber hinaus und/oder alternativ kann es vorgesehen sein, dass das Fahrgestell 48 derart abgestützt wird, so dass auch die Primärfeder zumindest im Wesentlichen unbelastet ist. Sofern die Primärfeder von einer Federvorrichtung 2 zumindest teilweise gebildet ist, ist auch diese sodann in dem unbelasteten Zustand. Bezug nehmend auf die vorangegangenen Erläuterungen ist es deshalb möglich, die einzelnen Federvorrichtungen 2 in den unbelasteten Zustand zu bringen, um die jeweils zugehörigen Federelemente 4 zu überprüfen und/oder zu warten. Ist dies erfolgt, kann die Abstützung der Karosserie 44 bzw. des Fahrgestells 48 aufgehoben werden, so dass die jeweiligen, lösbaren, formschlüssigen Verbindungen 28 wieder hergestellt werden. Dies gewährleistet die gewünschte Schutzwirkung der jeweiligen Federelemente 4 durch die Schutzelemente 14, 16.

Ergänzend sei darauf hingewiesen, dass "aufweisend" keine anderen Elemente oder Schritte ausschließt und "ein" oder "eine" keine Vielzahl ausschließt. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. **Federvorrichtung** (2), aufweisend:
eine Felge (3),
ein elastisch verformbares Federelement (4), und
ein Befestigungselement (6),
wobei ein erstes Ende (8) des Federelements (4) mit einer Innenseite (10) der Felge (3) und ein zweites Ende (12) des Federelements (4) mit dem Befestigungselement (6) verbunden sind, so dass sich das Federelement (4) von dem Befestigungselement (6) zu der Felge (3) erstreckt,
**dadurch gekennzeichnet, dass**
die Federvorrichtung (2) ein erstes, zylindrisches Schutzelement (14) und ein zweites, zylindrisches Schutzelement (16) aufweist,
wobei das erste Schutzelement (14) an einer Außenseite (18) der Felge (3) befestigt ist, sich von der Felge (3) in Richtung des Befestigungselements (6) erstreckt und mantelseitig zu dem Federelement (4) angeordnet ist,
wobei das erste Schutzelement (14) ein erstes Verbindungsprofil (20) an einem von der Felge (3) abgewandten Endabschnitt (22) aufweist,
wobei das zweite Schutzelement (16) an dem Befestigungselement (6) befestigt ist, sich von dem Befestigungselement (6) in Richtung der Felge (3) erstreckt und mantelseitig zu dem Federelement (4) angeordnet ist,
wobei das zweite Schutzelement (16) ein zweites Verbindungsprofil (24) an einem von dem Befestigungselement (6) abgewandten Endabschnitt (26) aufweist, und
wobei das Federelement (4), das erste Schutzelement (14) und das zweite Schutzelement (16) derart ausgebildet sind, dass eine lösbare, formschlüssige Verbindung (28) zwischen dem ersten Verbindungsprofil (20) und dem zweiten Verbindungsprofil (24) entsteht, wenn die Federvorrichtung (2) in einem ersten Belastungszustand ist.

2. Federvorrichtung (2) nach dem vorhergehenden Anspruch, **dadurch gekennzeichnet, dass** die Federvorrichtung (2) in dem ersten Belastungszustand ist, wenn mindestens eine erste vorbestimmte Kraft in einer Federrichtung (F) auf die Federvorrichtung (2) wirkt.

3. Federvorrichtung (2) nach einem der vorhergehenden Ansprüche, **dadurch gekennzeichnet, dass** sich das erste und zweite Schutzelement (14, 16) im ersten Belastungszustand gemeinsam mantelseitig um das Federelement (4) erstrecken, so dass zwischen dem Federelement (4) und den Schutzelementen (14, 16) ein geschlossener Schutzraum (40) gebildet ist.

4. Federvorrichtung (2) nach einem der vorhergehenden Ansprüche, **dadurch gekennzeichnet, dass** das erste und zweite Schutzelement (14, 16) derart ausgebildet sind, so dass diese im ersten Belastungszustand kontaktfrei zu dem Federelement (4) angeordnet sind.

5. Federvorrichtung (2) nach einem der vorhergehenden Ansprüche, **dadurch gekennzeichnet, dass** das Federelement (4), das erste Schutzelement (14) und das zweite Schutzelement (16) derart ausgebildet sind, dass das erste Verbindungsprofil (20) und das zweite Verbindungsprofil (24) voneinander getrennt sind, wenn die Federvorrichtung (2) in einem unbelasteten Zustand ist.

6. Federvorrichtung (2) nach dem vorhergehenden Anspruch, **dadurch gekennzeichnet, dass** die Federvorrichtung (2) in dem unbelasteten Zustand ist, wenn keine Kraft oder weniger als die erste vorbestimmte Kraft in der Federrichtung (F) auf die Federvorrichtung (2) wirkt.

7. Federvorrichtung (2) nach einem der vorhergehenden Ansprüche 4 bis 5, **dadurch gekennzeichnet, dass** das erste und zweite Verbindungsprofil (20, 24) zu mindestens 1 cm, vorzugsweise zu mindestens 3,5 cm, voneinander getrennt sind, wenn die Federvorrichtung (2) in einem unbelasteten Zustand ist.

8. Federvorrichtung (2) nach einem der vorhergehenden Ansprüche, **dadurch gekennzeichnet, dass** das erste und/oder zweite Schutzelement (14, 16) aus wenigstens einer Polymermischung aufgebaut ist bzw. sind, wobei die Polymermischung wenigstens ein Flammschutzmittel enthält.

9. Federvorrichtung (2) nach einem der vorhergehenden Ansprüche, **dadurch gekennzeichnet, dass** eines der beiden Verbindungsprofile (20, 24) als eine umlaufende Nut ausgebildet ist und dass das andere Verbindungsprofil (24, 20) als ein umlaufender Ring ausgebildet ist, so dass der Ring in die Nut einfasst, um die lösbare, formschlüssige Verbindung (28) zu bilden, wenn die Federvorrichtung (2) in dem ersten Belastungszustand ist.

10. Federvorrichtung (2) nach einem der vorhergehenden Ansprüche, **dadurch gekennzeichnet, dass** eines der beiden Verbindungsprofile (20, 24) einen Zentrierabschnitt aufweist, der zum Führen des anderen Verbindungsprofils (24, 20) ausgebildet ist.

11. Federvorrichtung (2) nach einem der vorhergehenden Ansprüche, **dadurch gekennzeichnet, dass** eines der beiden Schutzelemente (14, 16) als ein zumindest im Wesentlichen kreiszylindrisches Schutzelement (14, 16) ausgebildet ist und dass das andere Schutzelement als ein balgförmiges Schutzelement (16, 14) ausgebildet ist.

12. **Federsystem,** aufweisend: eine Primärfeder, die von einer Federvorrichtung (2) nach einem der vorhergehenden Ansprüche gebildet ist, und eine Sekundärfeder (46), wobei die Primärfeder und die Sekundärfeder (46) mechanisch in Reihe gekoppelt sind.

13. Federsystem nach dem vorhergehenden Anspruch, **dadurch gekennzeichnet, dass** die Sekundärfeder (46) als eine Luftfeder ausgebildet ist.

14. **Fahrzeug** (42) mit einer Federvorrichtung (2) nach einem der vorhergehenden Ansprüche 1 bis 11 oder mit einem Federsystem nach einem der vorhergehenden Ansprüche 12 bis 13.

## Claims

1. Spring apparatus (2), having:
a rim (3),
an elastically deformable spring element (4), and
a fastening element (6),
a first end (8) of the spring element (4) being connected to an inner side (10) of the rim (3), and a second end (12) of the spring element (4) being connected to the fastening element (6), with the result that the spring element (4) extends from the fastening element (6) to the rim (3),
**characterized in that**
the spring apparatus (2) has a first, cylindrical protective element (14) and a second, cylindrical protective element (16),
the first protective element (14) being fastened to an outer side (18) of the rim (3), extending from the rim (3) in the direction of the fastening element (6), and being arranged on the shell side with respect to the spring element (4),
the first protective element (14) having a first connecting profile (20) on an end section (22) which faces away from the rim (3),
the second protective element (16) being fastened to the fastening element (6), extending from the fastening element (6) in the direction of the rim (3), and being arranged on the shell side with respect to the spring element (4),
the second protective element (16) having a second connecting profile (24) on an end section (26) which faces away from the fastening element (6), and
the spring element (4), the first protective element (14) and the second protective element (16) being configured in such a way that a releasable, positively locking connection (28) is produced between the first connecting profile (20) and the second connecting profile (24) when the spring apparatus (2) is in a first loading state.

2. Spring apparatus (2) according to the preceding claim, **characterized in that** the spring apparatus (2) is in the first loading state when at least a first predefined force acts on the spring apparatus (2) in a spring direction (F).

3. Spring apparatus (2) according to either of the preceding claims, **characterized in that** the first and second protective element (14, 16) extend jointly on the shell side around the spring element (4) in the first loading state, with the result that a closed protective space (40) is formed between the spring element (4) and the protective elements (14, 16).

4. Spring apparatus (2) according to one of the preceding claims, **characterized in that** the first and second protective element (14, 16) are configured such that they are arranged in a contact-free manner with respect to the spring element (4) in the first loading state.

5. Spring apparatus (2) according to one of the preceding claims, **characterized in that** the spring element (4), the first protective element (14) and the second protective element (16) are configured in such a way that the first connecting profile (20) and the second connecting profile (24) are separated from one another when the spring apparatus (2) is in an unloaded state.

6. Spring apparatus (2) according to the preceding claim, **characterized in that** the spring apparatus (2) is in the unloaded state when no force or less than the first predefined force acts on the spring apparatus (2) in the spring direction (F).

7. Spring apparatus (2) according to either of the preceding Claims 4 and 5, **characterized in that** the first and second connecting profile (20, 24) are separated from one another by at least 1 cm, preferably by at least 3.5 cm, when the spring apparatus (2) is in an unloaded state.

8. Spring apparatus (2) according to one of the preceding claims, **characterized in that** the first and/or second protective element (14, 16) are/is constructed from at least one polymeric compound, the polymeric compound comprising at least one flame retardant.

9. Spring apparatus (2) according to one of the preceding claims, **characterized in that** one of the two connecting profiles (20, 24) is configured as a circumferential groove, and **in that** the other connecting profile (24, 20) is configured as a circumferential ring, with the result that the ring engages into the groove, in order to form the releasable, positively locking connection (28) when the spring apparatus (2) is in the first loading state.

10. Spring apparatus (2) according to one of the preceding claims, **characterized in that** one of the two connecting profiles (20, 24) has a centring section which is configured for guiding the other connecting profile (24, 20).

11. Spring apparatus (2) according to one of the preceding claims, **characterized in that** one of the two protective elements (14, 16) is configured as an at least substantially circular-cylindrical protective element (14, 16), and **in that** the other protective element is configured as a bellows-shaped protective element (16, 14) .

12. Spring system, having: a primary spring which is formed by a spring apparatus (2) according to one of the preceding claims, and a secondary spring (46), the primary spring and the secondary spring (46) being coupled mechanically in series.

13. Spring system according to the preceding claim, **characterized in that** the secondary spring (46) is configured as an air spring.

14. Vehicle (42) with a spring apparatus (2) according to one of the preceding Claims 1 to 11 or with a spring system according to either of the preceding Claims 12 and 13.

## Revendications

1. **Dispositif à ressort** (2), comprenant :
une jante (3),
un élément ressort déformable élastiquement (4), et
un élément de fixation (6),
une première extrémité (8) de l'élément ressort (4) étant reliée avec un côté intérieur (10) de la jante (3) et une deuxième extrémité (12) de l'élément ressort (4) étant reliée avec l'élément de fixation (6), de telle sorte que l'élément ressort (4) s'étende à partir de l'élément de fixation (6) jusqu'à la jante (3),
**caractérisé en ce que**
le dispositif à ressort (2) comprend un premier élément de protection cylindrique (14) et un deuxième élément de protection cylindrique (16),
le premier élément de protection (14) étant fixé sur un côté extérieur (18) de la jante (3), s'étendant à partir de la jante (3) en direction de l'élément de fixation (6) et étant agencé d'un côté d'enveloppe par rapport à l'élément ressort (4),
le premier élément de protection (14) comprenant un premier profilé de liaison (20) au niveau d'une section d'extrémité (22) détournée de la jante (3),
le deuxième élément de protection (16) étant fixé sur l'élément de fixation (6), s'étendant à partir de l'élément de fixation (6) en direction de la jante (3) et étant agencé du côté d'enveloppe par rapport à l'élément ressort (4),
le deuxième élément de protection (16) comprenant un deuxième profilé de liaison (24) au niveau d'une section d'extrémité (26) détournée de l'élément de fixation (6), et
l'élément ressort (4), le premier élément de protection (14) et le deuxième élément de protection (16) étant configurés de telle sorte qu'une liaison amovible par accouplement de forme (28) soit formée entre le premier profilé de liaison (20) et le deuxième profilé de liaison (24) lorsque le dispositif à ressort (2) est dans un premier état de sollicitation.

2. Dispositif à ressort (2) selon la revendication précédente, **caractérisé en ce que** le dispositif à ressort (2) est dans le premier état de sollicitation lorsqu'au moins une première force prédéterminée agit dans une direction de ressort (F) sur le dispositif à ressort (2).

3. Dispositif à ressort (2) selon l'une quelconque des revendications précédentes, **caractérisé en ce que** le premier et le deuxième élément de protection (14, 16) s'étendent dans le premier état de sollicitation conjointement du côté d'enveloppe autour de l'élément ressort (4), de telle sorte qu'une chambre de protection fermée (40) soit formée entre l'élément ressort (4) et les éléments de protection (14, 16).

4. Dispositif à ressort (2) selon l'une quelconque des revendications précédentes, **caractérisé en ce que** le premier et le deuxième élément de protection (14, 16) sont configurés de telle sorte que ceux-ci sont agencés sans contact avec l'élément ressort (4) dans le premier état de sollicitation.

5. Dispositif à ressort (2) selon l'une quelconque des revendications précédentes, **caractérisé en ce que** l'élément ressort (4), le premier élément de protection (14) et le deuxième élément de protection (16) sont configurés de telle sorte que le premier profilé de liaison (20) et le deuxième profilé de liaison (24) soient séparés l'un de l'autre lorsque le dispositif à ressort (2) est dans un état non sollicité.

6. Dispositif à ressort (2) selon la revendication précédente, **caractérisé en ce que** le dispositif à ressort (2) est dans l'état non sollicité lorsqu'aucune force ou moins que la première force prédéterminée agit dans la direction de ressort (F) sur le dispositif à ressort (2).

7. Dispositif à ressort (2) selon l'une quelconque des revendications 4 à 5 précédentes, **caractérisé en ce que** le premier et le deuxième profilé de liaison (20, 24) sont séparés l'un de l'autre par au moins 1 cm, de préférence au moins 3,5 cm, lorsque le dispositif à ressort (2) est dans un état non sollicité.

8. Dispositif à ressort (2) selon l'une quelconque des revendications précédentes, **caractérisé en ce que** le premier et/ou le deuxième élément de protection (14, 16) sont formés à partir d'au moins un mélange de polymère, le mélange de polymère contenant au moins un agent ignifuge.

9. Dispositif à ressort (2) selon l'une quelconque des revendications précédentes, **caractérisé en ce qu'**un des deux profilés de liaison (20, 24) est configuré sous la forme d'une rainure périphérique et **en ce que** l'autre profilé de liaison (24, 20) est configuré sous la forme d'un anneau périphérique, de telle sorte que l'anneau soit enchâssé dans la rainure, afin de former la liaison amovible par accouplement de forme (28) lorsque le dispositif à ressort (2) est dans le premier état de sollicitation.

10. Dispositif à ressort (2) selon l'une quelconque des revendications précédentes, **caractérisé en ce qu'**un des deux profilés de liaison (20, 24) comprend une section de centrage, qui est configurée pour le guidage de l'autre profilé de liaison (24, 20).

11. Dispositif à ressort (2) selon l'une quelconque des revendications précédentes, **caractérisé en ce qu'**un des deux éléments de protection (14, 16) est configuré sous la forme d'un élément de protection au moins essentiellement cylindrique circulaire (14, 16) et **en ce que** l'autre élément de protection est configuré sous la forme d'un élément de protection en forme de soufflet (16, 14).

12. **Système à ressort,** comprenant : un ressort primaire, qui est formé par un dispositif à ressort (2) selon l'une quelconque des revendications précédentes, et un ressort secondaire (46), le ressort primaire et le ressort secondaire (46) étant couplés mécaniquement en série.

13. Système à ressort selon la revendication précédente, **caractérisé en ce que** le ressort secondaire (46) est configuré sous la forme d'un ressort pneumatique.

14. **Véhicule** (42) comprenant un dispositif à ressort (2) selon l'une quelconque des revendications 1 à 11 précédentes ou comprenant un système à ressort selon l'une quelconque des revendications 12 à 13 précédentes.
